# EUROPEAN PATENT APPLICATION

(11) **EP 3 696 671 A1**
(43) Date of publication of application: **19.08.2020**
(21) Application number: 19020071.7
(22) Date of filing: 13.02.2019
(51) Int. Cl.: G06F 9/50

(54) **OPERATION RECORDAL SYSTEM AND METHOD OF OPERATING THEREOF**

(71) Applicant: UVUE Limited, Cambridge CB4 0WS (GB)
(72) Inventor: Baykaner, Khan Richard, Great Cambourne, CB23 5JL (GB); Rønnow, Troels F., Cambridge, CB2 9BG (GB)
(74) Representative: Norris, Timothy Sweyn

(57) **Abstract**

Disclosed is an operation recordal system that includes computing nodes, wherein, the system facilitates optimal recordal of operation records as entries in a distributed ledger. The system receives operation recordal requests, corresponding to operation records, from a first set of computing nodes, to be recorded as at least one entry in the distributed ledger and generates a computational task for recordal of the operation records. The system receives a data response comprising a data response commitment and a proposed resolving process to the computational task, from each of a second set of computing nodes. The system employs a directed acyclic graph for storing the data responses therein and analyse the data response received from each of the second set of computing nodes to determines an optimal resolving process for the recordal of operation records as entries in the distributed ledger.

## Description

### TECHNICAL FIELD

The present disclosure relates generally to operation recordal systems; more specifically, the present disclosure relates to systems that operate to record operations performed by a configuration of computing nodes, wherein the computing nodes perform an organized exchange of resources, wherein the recordal of the operations is performed in a distributed ledger. Moreover, the present disclosure relates to methods of (namely, to methods for) operating the aforementioned operation recordal systems. Furthermore, the present disclosure also relates to computer program products comprising non-transitory computer-readable storage media having computer-readable instructions stored thereon, the computer-readable instructions being executable by a computerized device comprising processing hardware to execute aforementioned methods.

### BACKGROUND

In an increasingly technology-driven world, records related to processes and operations, such as mail delivery, load scheduling, contracts, are recorded digitally. Digital recordal of such operations allows for efficient management and timely updating of the records. However, such digital records are prone to cyber-attacks and unauthorized changes therein, thereby compromising the overall reliability of the records. Recently, distributed ledgers have been employed in various applications for recordal of different types of operations.

Notably, a distributed ledger enables securing of an operation by maintaining a record relating to each of the operations, therein. Specifically, the record relating to each of the operation is appended in the distributed ledger by way of a trust less and distributed consensus. Subsequently, the distributed consensus validates each of the operations by obtaining a resolving process for a computing task relating to each of the operations. In such case, a plurality of miners competes to solve the computing task. Specifically, the plurality of miners provides a proof-of-work upon solving the computing task that is employed to validate each of the operations. Moreover, a given miner from the plurality of miners, who solves a computing task relating to a given operation first, appends a record relating to the given operation on the distributed ledger. Additionally, the given miner is incentivised for providing the proof-of-work for solving the computing task.

However, in such an instance, each of the plurality of miners compete to solve the computing task. Additionally, solving such computing task is a very energy intensive and time-consuming task. Specifically, solving the computing task is accompanied with large amounts of electricity consumption by each of the plurality of miners. Therefore, such method of deriving the resolving process for the computing task is inefficient owing to large number of miners investing resources (such as, processing power, electricity, fiat currencies) to solve the same computing task. Moreover, only the given miner is incentivised for solving the computational task thereby making the method uneconomical for the plurality of miners other than the given miner.

Recently, improved methods are employed to curtail the electricity consumption in solving the computing task by the plurality of miners. Specifically, a proof-of-stake protocol is employed to limit a number of the plurality of miners. In such case, a given miner is chosen in a deterministic way to solve the computing task based on wealth (namely, stake) staked by each of the plurality of miners. Moreover, in such a system, the given miner is provided with an operation resource token upon solving the computing algorithm, wherein the operation resource token for solving the computing task is decided based on the number of plurality of miners and a difficulty of the computing task.

However, in such case, the miner must own stake so as to participate in the distributed consensus mechanism (facilitated by, for example, a consensus proffering process). Subsequently, the miner having highest amount of stake may be chosen repeatedly for solving the computing task thereby potentially preventing new miners from winning an incentive. Moreover, such a system may attract potential fraudulent attacks owing a determined miner for solving the computing task thereby making the system insecure for commercial operations.

Therefore, in light of the foregoing discussion, there exists a need to overcome the aforementioned drawbacks associated with the conventional approached to recordal of operations in a distributed ledger.

### SUMMARY

The present disclosure seeks to provide an operation recordal system that includes a plurality of computing nodes that are mutually interconnected via a data communication network, wherein, when in operation, the operation recordal system facilitates an optimal recordal of operation records as entries in a distributed ledger. The present disclosure seeks to improve performance efficiency of a decentralized computer network (implemented as the distributed ledger) in terms of reliability and robustness against malicious attacks (system safety). Additionally, the present disclosure decreases "*downtime*" speed, and enhances security (wherein encryption and decryption are relevant in each step of recordal of an operation) when implementing an operation of recordal of the plurality of operation recordal requests via use of the distributed, secured, and reliable operation recordal system.

The present disclosure also seeks to provide a method of (for) operating an operation recordal system that includes that includes a plurality of computing nodes that are mutually interconnected via a data communication network, wherein, when in operation, the operation recordal system facilitates an optimal recordal of operation records as entries in a distributed ledger.

In one aspect, an embodiment of the present disclosure provides an operation recordal system that includes a plurality of computing nodes that are mutually interconnected via a data communication network, wherein, when in operation, the operation recordal system facilitates an optimal recordal of operation records as entries in a distributed ledger, wherein:
(a) the system receives a plurality of operation recordal requests, corresponding to a plurality of operation records, from a first set of computing nodes, to be recorded as at least one entry in the distributed ledger and generates a computational task for recordal of the plurality of operation records;
(b) the system receives a data response comprising a data response commitment and a proposed resolving process to the computational task, from each of a computing node in a second set of computing nodes, wherein the system employs a directed acyclic graph for storing the data responses therein;
(c) the directed acyclic graph analyses the data response received from each of the computing node in the second set of computing nodes and determines an optimal resolving process for the recordal of operation records as entries in the distributed ledger.

The present disclosure is of advantage that there is provided an at least optimal solution to providing more robust operation of operation recordal systems, for example from malicious third-party attacks. Moreover, the present disclosure is of advantage in that it provides a more efficient approach for operation recordal that requires less processing power and thus, consumes less energy (significantly reduced electricity consumptions), and also expends less time for every recordal of operations. Such an efficient, effective and robust approach is using the operation recordal system enhances security of the system by preventing attacks, such as cyber-attacks, and further enhances utilitarian of the system with regard to energy and time. Such efficiency against energy and time consumption makes the system competent for enhanced performance and saves cost of operation thereof.

In the context of the present invention an optimal "resolving process" is a process for provide an optimal solution (or optimization); for example finding a minimum state (or condition) of a system physical characteristic, typically defined by a parameter such as energy consumption, data storage capacity, data flowrates, computational time, system response time, system safety (in this case a state of maximum safety or minimum vulnerability).

Optionally, the operation recordal system receives the data response from each of the second set of computing nodes to implement an unbiased competitive process amongst the second set of computing nodes.

Optionally, the operation recordal system requires each of the second set of computing nodes to deposit a stake resource.

Optionally, the second set of computing nodes employ Markov chain Monte Carlo (MCMC) methods (algorithms) to generate the proposed resolving process.

Optionally, the directed acyclic graph determines the optimal resolving process from the proposed resolving process to the computational task received from each of the computing node in the second set of computing nodes based on a usefulness of each of the proposed resolving processes.

Optionally, the operation recordal system employs a distributed random beacon to generate a random number for inclusion in the entries in the distributed ledger.

Optionally, the operation recordal system operates to accommodate an executable contract object defining the computational task that is to be solved.

Optionally, the data response commitment of the data response offered by a computing node from the second set of computing nodes comprise at least one of: a quantity parameter associated with the proposed data response , a nonce, a public key hash associated with the computing node.

Optionally, the operation recordal system further employs the optimal resolving process for the recordal of operation records as entries in the distributed ledger and incentivises a computing node from the second set of computing nodes, associated with the optimal resolving process.

More optionally, the operation recordal system incentivises the computing node from the second set of computing nodes, associated with the optimal resolving process by acquiring a quasi-static operation resource token from the first set of computing nodes.

In another aspect, an embodiment of the present disclosure provides a method of (for) operating an operation recordal system that includes that includes a plurality of computing nodes that are mutually interconnected via a data communication network, wherein, when in operation, the operation recordal system facilitates an optimal recordal of operation records as entries in a distributed ledger, wherein the method includes:
(a) receiving a plurality of operation recordal requests, corresponding to a plurality of operation records, from a first set of computing nodes, to be recorded as at least one entry in the distributed ledger and generating a computational task for recordal of the plurality of operation records;
(b) receiving a data response comprising a data response commitment and a proposed resolving process to the computational task, from each of a computing node in a second set of computing nodes, wherein the method employs a directed acyclic graph for storing the data responses therein;
(c) analysing the data response received from each of the computing node in the second set of computing nodes using the directed acyclic graph and determining an optimal resolving process for the recordal of operation records as entries in the distributed ledger.

Optionally, the method comprises receiving the data response from each of the second set of computing nodes to implement an unbiased competitive process the second set of computing nodes.

Optionally, the method requires each of the second set of computing nodes to deposit a stake resource.

Optionally, the second set of computing nodes employ Markov chain Monte Carlo (MCMC) methods (algorithms) to generate the proposed resolving process.

Optionally, the directed acyclic graph determines the optimal resolving process from the proposed resolving process to the computational task received from each of the computing node in the second set of computing nodes based on a usefulness of each of the proposed resolving processes. Optionally, the method employs a distributed random beacon to generate a random number for inclusion in the entries in the distributed ledger.

Optionally, the method operates to accommodate an executable contract object defining the computational task that is to be solved.

Optionally, the method further employs the optimal resolving process for the recordal of operation records as entries in the distributed ledger and incentivises a computing node from the second set of computing nodes, associated with the optimal resolving process.

More optionally, the method incentivises the computing node from the second set of computing nodes, associated with the optimal resolving process by acquiring a quasi-static operation resource token from the first set of computing nodes.

In yet another aspect, an embodiment of the present disclosure provides a computer program product comprising non-transitory computer-readable storage media having computer-readable instructions stored thereon, the computer-readable instructions being executable (implemented) by a computerized device comprising processing hardware to execute an aforesaid method.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:
FIG. 1 is an illustration of an operation recordal system, in accordance with an embodiment of the present disclosure;
FIG. 2 is a schematic illustration of the operation recordal system of FIG. 1 in operation, in accordance with an embodiment of the present disclosure; and
FIG. 3 is an illustration of steps of a method of (namely, a method for) operating an operation recordal system, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

In one aspect, an embodiment of the present disclosure provides an operation recordal system that includes a plurality of computing nodes that are mutually interconnected via a data communication network, wherein, when in operation, the operation recordal system facilitates an optimal recordal of operation records as entries in a distributed ledger, wherein:
(a) the system receives a plurality of operation recordal requests, corresponding to a plurality of operation records, from a first set of computing nodes, to be recorded as at least one entry in the distributed ledger and generates a computational task for recordal of the plurality of operation records;
(b) the system receives a data response comprising a data response commitment and a proposed resolving process to the computational task, from each of a computing node in a second set of computing nodes, wherein the system employs a directed acyclic graph for storing the data responses therein;
(c) the directed acyclic graph analyses the data response received from each of the computing node in the second set of computing nodes and determines an optimal resolving process for the recordal of operation records as entries in the distributed ledger

In another aspect, an embodiment of the present disclosure provides a method of (for) operating an operation recordal system that includes that includes a plurality of computing nodes that are mutually interconnected via a data communication network, wherein, when in operation, the operation recordal system facilitates an optimal recordal of operation records as entries in a distributed ledger, wherein the method includes:
(a) receiving a plurality of operation recordal requests, corresponding to a plurality of operation records, from a first set of computing nodes, to be recorded as at least one entry in the distributed ledger and generating a computational task for recordal of the plurality of operation records;
(b) receiving a data response comprising a data response commitment and a proposed resolving process to the computational task, from each of a computing node in a second set of computing nodes, wherein the method employs a directed acyclic graph for storing the data responses therein;
(c) analysing the data response received from each of the computing node in the second set of computing nodes using the directed acyclic graph and determining an optimal resolving process for the recordal of operation records as entries in the distributed ledger.

The present disclosure seeks to provide a solution to a plurality of technical problems associated with recordal of the plurality of operations as an entry in the distributed ledger. Pursuant to background of the present disclosure, there exists two major conventional methods (namely, a proof-of-work method and a proof-of stake method) for recordal of entries in the distributed ledger. However, the conventional methods possess crucial drawbacks. Specifically, colossal amount of work performed by second set of computing nodes (namely, miners) for generation of a resolving process to the computational task for recordal of the entry in the distributed ledger accounts for major drawback in the proof-of-work method.

Such a problem is addressed by the proof-of-stake method, wherein the resolving process for the computational task is only generated by a computing node that staked a highest stake resource. However, in such case, the entire recordal system possess a major threat relating to imbalance in market. The computing node providing highest stake resource will continuously receive incentives for resolving process thereby creating a huge distinction between stakes of plurality of computing nodes participating for generation of resolving process in the proof-of-stake method, at a given time. Such distinction discourages unfair and biased distribution of resources, services and operational capabilities and encourages a highly unbiased practice of the competitive process amongst the plurality of computing nodes.

The present disclosure, addresses said problem by operating to facilitate a consensus proffering process (similar to a proof-of-stake method) thereby preventing plurality of computing nodes from using a significantly large amount of time and resources for generation of a resolving process to the computational task such as the obtainment of a consensus. Such savings of resources may be computational time, time (literal meaning of time, a physical quantity), data processor energy use, data processor energy dissipation, heat generation in computing hardware, cooling energy applied to computing hardware or any other measure associated with Central Processing Unit (CPU) of a computing device. Moreover, such savings of resources are a direct result of the optimal (see below) solution resulting from the method and system claimed herewith. It is also important to note that, in the present invention, the recordal system is arranged to the operate (implement) the method in a timewise continuous manner. As such, by definition, a decrease in computational time, results in decreases in time (as a physical quantity) which would otherwise take for a consensus to be achieved a plurality of miners compete to solve the computing task without the implementation of the method of (for) operating the recordal system.

In the context of the present invention, an 'optimal solution', or optimisation, is reached when a desired minimum (or maximum) critical value point is achieved, such value being related to an improvement in a physical parameter such as a desired computational time for completion of the consensus method. For example, within the system, a minimum critical value may be achieved since it represents a statistically acceptable value which reduces the otherwise computational time that would have been used. This is referred to as an optimal solution or an optimal recordal, with the system being optimised even though other solutions may still exist in which the physical parameter, for example computation time, could be reduced even further. In other fields of technology, this may be referred to as local minimum (or local maximum) which are acceptable to the system, despite the possibility of an overall minimum (or maximum) still exist. In the present invention, the system includes a plurality of computing nodes that are mutually interconnected via a data communication network, wherein such computing nodes comprise a plurality of computing devices, wherein the computing nodes, and therefore the computing devices, are arranged in a decentralised form. The system the presence of computing devices interconnected via a data communication network to perform the method steps. The term "*the plurality of computing nodes*" relates to computational elements that are operable to respond to, and processes instructions that drive, the distributed computational system. Optionally, at least a part of the system is implemented using the plurality of computing devices that functions as nodes including, but are not limited to, a microprocessor, a microcontroller, a complex instruction set computing (CISC) microprocessor, a bespoke integrated circuit (ASIC), a reduced instruction set (RISC) microprocessor, a very long instruction word (VLIW) microprocessor, an artificial intelligence (AI) computing engine based on hierarchical networks of variable-state machines, or any other type of processing circuit. Furthermore, the plurality of computing nodes can be one or more individual processors, processing devices and various elements associated with a processing device that may be shared by other processing devices. Additionally, the plurality of computing nodes, processing devices and elements are arranged in various architectures for responding to and processing the instructions that drive the system. Beneficially, such arrangement of the plurality if computing nodes provides adaptability and flexibility to the distributed computing system.

Moreover, optionally, the plurality of computing nodes is communicably coupled to each other via a data communication network. The data communication network allows for communication among the plurality of computing nodes. In other words, each of the plurality of computing nodes are capable of communicating with other computing nodes via the data communication network. Notably, the data communication network relates to an arrangement of interconnected, programmable and/or non-programmable components that, when in operation, facilitate data communication between one or more electronic devices and/or databases. Furthermore, the data communication network may include, but is not limited to, a peer-to-peer (P2P) network, a hybrid peer-to-peer network, local area networks (LANs), radio access networks (RANs), metropolitan area networks (MANs), wide area networks (WANs), all of or a portion of a public network such as global computer network known as the Internet®, a private network, a cellular network and any other communication system.

Additionally, the operation recordal system as described in the present disclosure optimizes the operation of recordal of entries in the distributed ledger in terms of run-time. Specifically, the operation recordal system does not encounter decreased run time owing to an increase in a number of the plurality of computing nodes (specifically, second set of computing nodes). Moreover, the operation recordal system facilitates an effective consensus proffering process that determines a computing node, providing competent data responses, by analysing data responses provided by plurality of computing nodes for participation in the consensus proffering process. Beneficially, analysing the provided data responses enables determination of an optimal resolving process that further allows acknowledging winning computing node not based only on a (quantity) parameter associated with proposed data response in a data response provided by the winning computing node, but also based on efficiency of resolving process proposed by the winning computing node, with incentive quantity. Consequently, huge distinction in stakes facilitating "rich getting richer" protocol amongst the plurality of computing nodes is prevented. Additionally, employing optimal resolving processes for recordal of entries in the distributed allows for an efficient, effective and robust approach for carrying out recordals within the distributed economy.

Specifically, the system operates to perform at an optimum speed without any scaling in initial resources (for example, computing power, energy consumption, and so forth) to implement the process involved therein, thereby making the system more efficient and effective. Additionally, with a gradual increase in the computing nodes in the distributed ledger, the system, however, does not compromise in terms of security and speed, thereby making the system secured, advantageous and economic in terms of operation.

Throughout the present disclosure, the term "*operation*" refers to an exchange of resources (for example, provided as services, information, products and so forth) between two or more parties (namely, participants of the operation). Specifically, the operation is an agreement between a buyer (namely, a participant who consumes) and a seller (a participant who offers) to exchange the resources.

For example, a party A may perform an operation with another party B, wherein the party A may provide an incentive to the party B in a form of resources (for example, in a form of a technical resource pertaining to at least one of: an access to data storage, an access to data memory, an access to data communication system bandwidth, access to data communication channels or ports, data processor energy use, data processor energy dissipation, an access time taken by data processing resources during operations, heat generation in computing hardware, cooling energy applied to computing hardware or any other measure associated with one or more CPU cycles) in return for a software program product being provided by the party B. Notably, (for example, remuneration, a technical resource as aforementioned, and so forth) are provided by a first party, such as a business entity, associated with a first computing node, to a second party for services, information, products and the like provided by the second party, such as a miner, associated with the second set of computing nodes. In addition, incentives are payments in a form of a value, a token, a fiat currency and the like provided by the first party to the second party *in lieu* of the aforesaid technical resource (for example, services, information and/or products provided by the second party).

It will be appreciated that the terms "first", "second" and like terms herein do not denote any specific role or order or importance, but rather are used to distinguish one party from another. In other words, the first party and the second party can act as a transmitting party and a receiving party, respectively, at a given point of time, and can act as a receiving party and a transmitting party, respectively, at another point of time.

Pursuant to embodiments of the present disclosure, the operation is to be recorded so as to prevent fraudulent cases and for maintain a record thereof. By recording the operation of, for example, the technical resource, the aforementioned system provides the parties with a proof for participating in the operation of the technical resource.

In the present disclosure, the parties are able to access the operation recordal system via one or more of its computing nodes, for example using software applications that encrypt and/or decrypt data flowing therethrough to improve robustness and security of the operation; for example, such encryption employs a combination of encryption and data obfuscation. Thus, it will be appreciated that the parties may be users associated with the plurality of computing nodes included in the operation recordal system. Optionally, the parties are persons having knowledge pertaining to at least one of: finance, accounting, banking, commerce. Optionally, in this regard, the parties are independent participants performing the operation, or participants employed by at least one firm offering operation services. More optionally, the parties are software applications (namely, web bots) that runs automatically to perform the operation.

Throughout the present disclosure the term "*operation recordal system*" refers to a system for storing (namely, recording) of operation records associated with the operations between the parties in a distributed ledger. Such operations may include exchanges of data, for example data in encrypted and/or obfuscated form. The operation recordal system implements an economic framework that records data associated with the operations such as, for example, details of parties, date and time of operations, an executable contract object associated with the operations and so forth.

As aforementioned, the operation recordal system includes the plurality of computing nodes that are mutually interconnected via the data communication network. Furthermore, the term "*plurality of computing nodes*" refer to computational elements that are operable to respond to, and processes instructions that drive, the operation recordal system. Optionally, the plurality of computing nodes includes, but are not limited to, a microprocessor, a microcontroller, a complex instruction set computing (CISC) microprocessor, a reduced instruction set (RISC) microprocessor, a very long instruction word (VLIW) microprocessor, an artificial intelligence (AI) computing engine based on hierarchical networks of variable-state machines, or any other type of processing circuit. Furthermore, the computing nodes can be one or more individual processors, processing devices and various elements associated with a processing device that may be shared by other processing devices. Additionally, the plurality of computing nodes, processing devices and elements are arranged in various architectures for responding to and processing the instructions that drive the system. Optionally, the plurality of computing nodes is processing devices that operate automatically. In such regard, the plurality of computing nodes is equipped with artificial intelligence algorithms that responds to and performs the instructions that drive the system based on data learning techniques. More optionally, the plurality of computing nodes is processing devices that responds to and performs the instructions that drive the system based on an input provided from a user (namely, the parties involved in the operation).

Moreover, the plurality of computing nodes is communicably coupled to each other via the data communication network. The data communication network allows for communication among the plurality of computing nodes. In other words, each of the plurality of computing nodes is capable of communicating with other computing nodes via the data communication network in order to facilitate recordal of the operation records. Notably, the data communication network refers to an arrangement of interconnected, programmable and/or non-programmable components that, when in operation, facilitate data communication between one or more electronic devices and/or databases. Furthermore, the data communication network may include, but is not limited to, a peer-to-peer (P2P) network, a hybrid peer-to-peer network, local area networks (LANs), radio access networks (RANs), metropolitan area networks (MANs), wide area networks (WANs), all of or a portion of a public network such as global computer network known as the Internet®, a private network, a cellular network and any other communication system. Additionally, the data communication network employs wired or wireless communication that can be carried out via one or more known protocols, including, but not limited to, Internet Protocol (IP), Wireless Access Protocol (WAP), Frame Relay, or Asynchronous Transfer Mode (ATM). Moreover, any other suitable protocols using voice, video, data, or combinations thereof, can also be employed, for example VoIP.

In an example embodiment, the data communication network is implemented as a distributed peer-to-peer (P2P) network of interconnected plurality of computing nodes.

Furthermore, when in operation, the operation recordal system facilitates an optimal recordal of operation records as entries in the distributed ledger. Throughout the present disclosure, the term "*operation records*" refers to information constituting an evidence relating to an operation. Specifically, the operation records comprise information with regard to the operations, wherein the operation records may be kept (for example, stored) in a permanent manner for future reference. Optionally, the information comprised in a given operation records relating to a given operation include, for example, information relating to a buyer, information relating to a seller, information relating to a technical resource offered by the seller for the given operation, information relating to an amount offered by the buyer for the given operation, a time of the given operation, at least one account (such as, an online wallet, a bank account, and so forth) relating to the given operation, and so forth. Beneficially, the operation records provide an evidence for the occurrence of the operations thereby eliminating fraudulent cases and malicious activities relating to a fake or dummy operation. In an example, a given operation record may comprise names of parties '*Alice*' and '*Bob*' a technical resource provided by the party '*Alice*' '*100 Giga Hertz of processing power*', a resource offered by the party '*Bob*') '*10 Tera bytes of storage memory*', a date of the operation '*31-January-2019*', a time of the operation '*14:45*'.

Throughout the present disclosure, the term "*optimal recordal*" refers to a favourable method of storing an information. Specifically, the optimal recordal of the operation records refer to an efficient way of recording (namely, storing) of the operation records in the distributed ledger. Optionally, the optimal recordal of the operation records are described based on different parameters for different instances. Typically, the optimal recordal of the operation records is facilitated by an optimal solution for example, a recordal of a given operation record is termed as optimal recordal thereof if the recordal consumes lesser energy (namely, energy-efficient). In such case, the optimal recordal of the given operation record may further be termed as energy-efficient if recordal dissipates less heat. In another example, a recordal of a given operation record is termed as optimal recordal thereof if the recordal is performed in less time (namely, time efficient). In yet another example, the a recordal of a given operation record is termed as optimal recordal thereof if the recordal is more robust against malicious attacks by third-parties (namely, secure). In yet example, a recordal is termed as optimal recordal if the recordal bundles a plurality of operation records for recordal thereof such that the plurality of operation records is a maximum of operation records (for example, 1000 operation records corresponding to 1000 operations) that may be bundled as an entry in the distributed ledger. In yet another example, a recordal is termed as optimal recordal if the recordal allows energy-efficient, time-efficient, robust against malicious attacks, and efficient bundling of a plurality of operation records for recordal as an entry in the distributed ledger. It will be appreciated that the term "optimal recordal" does not intend to limit the scope of the claims in any way, and may be construed in different manners corresponding to different implementations of the present disclosure that are not described herein.

Furthermore, throughout the present disclosure, the term "*distributed ledger*" refers to a ledger (such as a database) of operations and/or contracts. In this regard, the ledger is consensually shared and synchronised across multiple sites, institutions or geographies. Pursuant to embodiments of the present disclosure, the distributed ledger refers to a database of the entries, wherein the entries comprise the operation records therein. Moreover, the distributed ledger is consensually shared and synchronised in a decentralised form across the plurality of computing nodes. Optionally, such computing nodes are established across different locations and operated by different users. Beneficially, the distributed ledger eliminates the need of a central authority to maintain and protect against manipulation. Specifically, the entries comprising the operation records in the distributed ledger are monitored publicly, thereby making the distributed ledger robust against attacks.

It will be appreciated that the plurality of computing nodes in the distributed ledger may access each of the entries in the distributed ledger and may own an identical copy of each of the entries. Notably, an alteration made to the distributed ledger is reflected almost instantly to each of the plurality of computing nodes. Subsequently, an alteration (such as recordal of an entry in the distributed ledger) is done when all or some of the plurality of computing nodes perform a validation with respect to the alteration. In such case, the entry is recorded (namely, added) in the distributed ledger in an immutable form when at least a threshold number of computing nodes from the plurality of computing nodes reach a consensus that the entry is valid. Alternatively, recording of the entry is denied when the threshold number of computing nodes reach a consensus that the entry is invalid. In an example, the threshold number of computing nodes to reach a consensus may be fifty-one per cent (51%) of the plurality of computing nodes. Optionally, information in the distributed ledger is stored securely using cryptography techniques. Beneficially, the distributed ledger allows reliable and transparent recordal of the entries, in that the operation records (for example, exchange of a technical resource over the data communication network) are permanently recorded and may not be capable of alterations. Thus, the distributed ledger provides greater transparency, enhanced security, improved traceability, increased efficiency and speed of operations.

Optionally, the operation recordal system initialises a pseudo random generator to determine a leader computing node from the plurality of computing nodes. In this regard, the leader computing node is determined for a time period corresponding to an epoch, wherein the time period corresponding to the epoch comprises a time period corresponding to a number of entries, for example, 30000 entries. Typically, the pseudo random generator is initialised by employing a random number from a previous epoch, at a beginning of the time period corresponding to the epoch. It will be appreciated that the distributed ledger comprises a plurality of leader computing nodes, wherein the plurality of leader computing nodes is generated for each time period corresponding to an epoch in the distributed ledger.

Moreover, optionally, the operation recordal system employs a distributed random beacon to generate a random number for inclusion in the entries in the distributed ledger. The random number is generated for each time period corresponding to an epoch such that the random number is validated by the plurality of leader computing nodes. Subsequently, a random number for a time period corresponding to an epoch is included in each of the entries recorded in the time period corresponding to the epoch. Beneficially, inclusion of the random number in the entries enables verification of sequence of entries in the distributed ledger throughout time and computing nodes joining the plurality of computing nodes in the distributed ledger. Moreover, such inclusion allows reproduction of the plurality of leader computing nodes thereby allowing verification of the entire distributed ledger.

It will be appreciated that the operation recordal system implemented by way of the distributed ledger cannot be secured by physical solutions against malicious activities, such as surveillance and access control. Subsequently, the robustness of the operation recordal systems against malicious third-party attacks is facilitated by enhancing cyber-security measures for infrastructures (namely, the distributed ledger). Subsequently, the distributed ledger is made more reliable for users thereof. Specifically, cyber-security against attacks in critical infrastructures such as the distributed ledgers (for example, financial networks implemented in a distributed ledger) prevents users of the critical infrastructures from vulnerable instances (such as identity thefts, fraudulent behaviours, and so forth). Optionally, the operation recordal system is able to comprehend a normal state of operation of the system through artificial intelligence techniques (for example, machine learning algorithms) which would take an enormous number of man-hours for humans to map and analyse. Additionally, the system is made more agile, robust, and flexible to adapt to new cyber-threat instances to prevent major disruptions and shut-downs of the system.

The term "*consensus*" refers to a specific set of rules that the plurality of computing nodes unfailingly enforce in order to validate the operations. Furthermore, the consensus regarding the operations refer to general agreement of the plurality of computing nodes related to the operations being executed in the distributed ledger system. Conventionally, such consensus is reached by providing a proof of work, proof of stake or voting by the plurality of computing nodes. However, such consensus mechanisms possess plurality of technical problems relating to run-time, overhead computation, energy waste, employed unfair means, and so forth. Pursuant to embodiments of the present disclosure, the invention aims to overcome, at least partially, drawbacks associated with conventional consensus system and provides a technical solution to effectively overcome the aforesaid drawbacks.

In an example embodiment, the distributed ledger is any one of: a public ledger, a private ledger. Furthermore, the distributed ledger arrangement with public (namely, un-permissioned) control of access may be open for every participant (namely, each of the plurality of computing nodes) of the operations within the system; however, it will be appreciated that it is highly desirable that data exchanges occurring in respect of the public distributed ledger are implemented via signals that are encrypted and/or obfuscated, to resist malicious third-party attacks, corruption or interference. Alternatively, the ledger with private (namely, permissioned) control of access have an access control layer implemented therein; however, as aforesaid, it will be appreciated that it is highly desirable that data exchanges occurring in respect of the ledger are implemented via signals that are encrypted and/or obfuscated, to resist malicious third-party attacks, corruption or interference. Specifically, the plurality of computing nodes has a control over who can join the operation recordal system and who can participate in the operations within the operation recordal system. Additionally, such a distributed ledger has access protection rights with defined constraints regarding rights to be exploited by the plurality of computing nodes.

Optionally, the distributed ledger is implemented by way of a blockchain platform. Specifically, in the blockchain platform, a given entry in the blockchain is stored in form of a block that stores a cryptographic hash of a previous entry, new information associated with the given entry and a timestamp associated with the given entry. Pursuant to embodiments of the present disclosure, the new information associated with the given entry in the distributed ledger may comprise at least one operation record.

Furthermore, optionally, the distributed ledger, specifically, the blockchain platform is managed by a peer-to-peer network collectively adhering to a protocol for inter-record communication and validating new entries in the distributed ledger. Moreover, once an entry is recorded in the distributed ledger, the entry cannot be altered. Thus, storing the operation records in the distributed ledger provides an immutable record comprising consensus pertaining to the operation records with its associated timestamp.

In an embodiment, one or more blocks within the blockchain platform have access rights associated thereto. The access rights allow and/or restrict users (namely, the parties involved in the operation, the plurality of computing nodes and so forth) to read, store, move and modify the data associated with the operations. Such access rights are beneficially implemented using private-public key encryption, alternatively or additionally, private-public key obfuscation.

The operation recordal system receives the plurality of operation recordal requests, corresponding to the plurality of operation records, from the first set of computing nodes, to be recorded as at least one entry in the distributed ledger and generates the computational task for recordal of the plurality of operation records. Throughout the present disclosure, the term "*operation recordal requests*" refer to seeking a permission (for example, by way of a signal) for recordal of the operation records. It will be appreciated that each of the plurality of operation records correspond to an operation from the plurality of operations. Subsequently, the plurality of operation recordal requests allows recordal of the plurality of operations in the distributed ledger upon successful validation thereof. Throughout the present disclosure, the term "*first set of computing nodes*" refer to computing nodes from the plurality of computing nodes that perform the plurality of operations relating to the plurality of operation records to be recorded in the distributed ledger. It will be appreciated that the first set of computing nodes refers to a cumulative set of computing nodes that relate to each of the plurality of operations, wherein an operation from the plurality of operations have two or more computing nodes participating in the operation. Specifically, the first set of computing nodes are directly or indirectly involved in the plurality of operations. Optionally, for a given operation, first set of computing nodes include at least one of: a seller computing node offering a given technical resource for the given operation, a buyer computing node purchasing the given technical resource for the given operation, a representative computing node of the buyer, a representative computing node of the seller.

The first set of computing nodes participating in a plurality of operations send the plurality of operation recordal requests to the operation recordal system. Optionally, an operation recordal request is generated when computing nodes in the first set of computing nodes perform an operation. As a response, the operation recordal system generates the computational task for recordal of the plurality of operation records as entries in the distributed ledger. Throughout the present disclosure, the term "*computational task*" refers to a general-purpose computing task that, when solved, provides validation for recordal of the plurality of operation records. Specifically, the operation recordal system distributes the computational task across the plurality of computing nodes. More specifically, some of the plurality of computing nodes participate to solve the computational task in order to establish consensus within the operation recordal system for recordal of the plurality of operation records. Moreover, such computational task includes intelligent interface tasks, machine learning tasks, image processing tasks, DNA sequence alignment tasks, speech recognition tasks, protein folding identification tasks, function generation tasks, cryptographic hash function tasks, and so forth. Optionally, resolving processes of such computational task may be used for other purposes within or outside the operation recordal system, for example for performing data encryption and data decryption tasks.

Optionally, the operation recordal system operates to accommodate an executable contract object defining the computational task that is to be solved. More optionally, the entries in the distributed ledger have an associated code for a computer program (namely, the executable contract object) that is executed in response to a proposed resolving process for the computational task. Notably, the executable contract object comprises a plurality of terms and conditions written in form of codes or algorithms. The computational task is embodied as terms and conditions of the executable contract object for recordal of the plurality of operation records as the at least one entry, at an instance a single entry, in the distributed ledger. Moreover, when executed, the executable contract object causes automated recordal of the plurality of operation recordal requests. The executable contract object relating to an entry in the distributed ledger cannot be altered owing to decentralised execution of the distributed ledger. In other words, the distributed ledger prevents any one party from controlling or altering the executable contract object added to the distributed ledger. In an example, the executable contract object is a smart contract. It will be appreciated that the data response (as discusses in detail later, herein) provided by each of the second set of computing nodes is to facilitate the execution of the executable contract object .

In an example implementation, the distributed ledger is implemented as a blockchain. In such case, the blockchain may comprise a block storing the executable contract object, wherein the executable contract object is a smart contract.

Furthermore, optionally, the executable contract object includes at least one human readable contract summary, and following machine-readable aspects: data specification, contract body, initial mining algorithm, and objective function for scoring the plurality of proposed resolving processes. The at least one human readable contract summary refers to a brief description of the computational task to be solved and work that has to be done for solving the computational task. The contract summary is written in a form that is understandable by the plurality of computing nodes and/or a user of the plurality of computing nodes. Additionally, the contract summary includes task computational statement for recordal of the plurality of recordal requests and requirement of the plurality of computing nodes (typically, the second set of computing nodes) associated with the recordal of the plurality of recordal requests. Furthermore, the contract body references the computational task.

It will be appreciated that solving the computational task is an energy-intensive task, wherein generation of a resolving process to the computational task is performed by the plurality of computing nodes. In an example, the plurality of computing nodes may perform computing algorithms for generation of the resolving process. Subsequently, performing such computing algorithms to solve the computational task leads to substantial consumption of data processing energy, energy dissipated as heat, and energy for facilitating cooling actions thereby increasing energy costs in fiat currencies substantially.

Therefore, optionally, the operation recordal system generates the computational task such that a resolving process (namely, a solution) to such computational task is employed for broader purposes beyond mere validation of the operation records for recordal thereof. Specifically, such consensus mechanism is facilitated by a proof-of-useful work mechanism that partially recovers energy costs by providing solutions to the computational tasks that are utilized for applications beyond validation. In an example, a computational task generated by the operation recordal system addresses a load pick-up scheduling problem, wherein a resolving process to the computational task is implemented so as to enable efficient scheduling and execution of load pick-up in a real-life instance as well as increasing data safety within the system.

In a first example, an executable contract object associated with a given operation recordal request relating to a given operation may include a computational task for scheduling meetings with a manager, wherein the computational task aims to provide a useful work that is implemented in real-life instance. In such case, the contract summary having a computational task statement states "*number of persons*", "*list of time availabilities*" and a goal stating requirements of the participant that is "*scheduling maximum number of appointments for each of the persons within respective time availabilities associated with them*". Additionally, the given computational task includes a condition that allows only one person to meet the manager in an instance.

Moreover, the executable contract object includes data required for recordal of the plurality of operation recordal requests in machine-readable form that is not understandable by humans. Beneficially, the data in machine-readable form allows the plurality of computing nodes to understand and process the data associated with the recordal of the plurality of operation recordal requests. Therefore, the data in machine-readable form allows for an efficient and substantially faster processing of the operation recordal requests. The machine-readable data included in the executable contract object comprises data specifications, wherein the data specifications include attributes related to data required for executing the executable contract object for recordal of the operation recordal requests.

The executable contract object includes the contract body, wherein the contract body includes the problem definition (parameters and other details associated with the computational task) that is to be solved for fulfilling the terms and conditions within the executable contract object . In addition, the contract body includes contract function(s) and state preserving function(s), wherein the contract function(s) allows the first set of computing nodes to place the plurality of operation recordal requests, comprising the plurality of operation records associated thereto, and confirm when a resolving process is achieved. Furthermore, the state preserving function(s) allows the first set of computing nodes to enquire about the resolving process.

Referring to the first example, the data specifications include "list of time slots", "*timetable*" and "*meetings*". Referring to the first example, the contract function(s) allows the first set of computing nodes to request a meeting giving "*a list of time availabilities*" and to "*confirm a proposed time slot*" by employing the executable contract object. Furthermore, the state preserving function(s) allows the first set of computing nodes to inquire regarding a currently assigned time slot.

Furthermore, the initial mining algorithm included in the executable contract object defines an approach to solve the computational task defined in the contract body associated with the plurality of operation recordal requests. The initial mining algorithm allows for optimization of the computational task included in the executable contract object associated with the recordal of the plurality of operation recordal requests. Referring to the first example, the initial mining algorithm may be a scheduling algorithm for scheduling meeting with the manager from list of available time slots. The initial mining algorithm is used by the second set of computing nodes in the distributed ledger for solving the computational task in the contract body of the executable contract object associated with the recordal of the plurality of operation recordal requests. Moreover, the second set of computing nodes can optionally modify the initial mining algorithm in order to obtain optimized and better resolving processes for the computational task. Beneficially, such optimization allows for better and optimized resolving processes by creating a competitive scenario between the second set of computing nodes. The second set of computing nodes can access the executable contract object and the plurality of operation records in order to retrieve details of the plurality of operations associated with the plurality of operation recordal requests and the initial mining algorithm for solving the computational task in the contract body of the executable contract object associated with the recordal of the plurality of operation recordal requests. Furthermore, the objective function is employed by the executable contract object to compare the data response (as discussed in detail later, herein) provided by each of the second set of computing nodes.

Throughout the present disclosure, the term "*directed acyclic graph*" refers to a data structure that employs topological ordering for storage of data therein. Specifically, the directed acyclic graph (DAG) allows sequential traversal of data stored therein from earlier to later. Moreover, the DAG is parallelised that results in higher throughput. The DAG is utilized for defining relationships between entries in the distributed ledger. Beneficially, the DAG is employed to build the distributed ledger having intrinsic parallelism during addition of entries in the distributed ledger, during traversal within the distributed ledger, and during communication between the plurality of computing nodes within the distributed ledger. Optionally, the DAG records partial ordering of events occurring over an asynchronous network of the plurality of computing nodes. Beneficially, the DAG enhance scalability of the distributed ledger while recording the plurality of operation records as entries in the distributed ledger, thereby allowing recordal of large number of operation records. Moreover, the recordal of the plurality of operation records in not impeded by network containing an increasing number of the plurality of computing nodes.

The system receives the data responses comprising the data response commitment and the proposed resolving process to the computational task, from each of the computing node in the second set of computing nodes. The system employs the directed acyclic graph for storing the data responses therein. In such case, the second set of computing nodes provide the data responses to participate in a consensus proffering process. Specifically, the consensus proffering process refers to an auction, wherein a winning computing node gets to validate the plurality of operation records thereby allowing recordal of the plurality of operation records as at least one entry in the distributed ledger. Optionally, each of the data responses comprising the data response commitment and the proposed resolving process is time-stamped.

Throughout the present disclosure, the term "*second set of computing nodes*" refer to computing nodes from the plurality of computing nodes that participate in the consensus proffering process for performing recordal of the plurality of operations recordal requests as at least one entry in the distributed ledger. Optionally, the second set of computing nodes also includes the first set of computing nodes. Moreover, the second set of computing nodes participate in the consensus proffering process by determining a resolving process to the computational task.

Optionally, the operation recordal system accommodates the executable contract object as a node in the directed acyclic graph in the distributed ledger. Notably, the computational task is distributed, as embodied in the executable contract object , according to a directed acyclic graph (DAG) allocation arrangement. Specifically, the directed acyclic graph (DAG) allocation arrangement uses a directed acyclic graph to track and verify execution of the computational task. Additionally, the directed acyclic graph is a finite directed graph with no directed cycles. Furthermore, the directed acyclic graph (DAG) allocation arrangement uses the directed acyclic graph to record proofs that the computational task has been executed. In an example embodiment, the computational task may be micro programs that use other micro programs that in turn together form a larger program; for example, the micro programs, likewise their execution, is handled in a hierarchical manner. In such an example, set of parameters for such micro programs may be located in the directed acyclic graph (DAG) allocation arrangement.

As mentioned previously, the DAG is used for storing data (namely, the data response) provided by each of the second set of computing nodes, required for providing a proof of participation thereof in the consensus proffering process for recordal of the plurality of operations records. Optionally, the DAG itself is protected via encryption, for example encryption firewalls. In addition, the directed acyclic graph (DAG) is created for each of entries in the distributed ledger, wherein the directed acyclic graph includes at least one node. Optionally, a given node from the at least one node in the directed acyclic graph includes a data response provided by a given computing node form the second set of computing nodes. It will be appreciated that the directed acyclic graph (DAG) is a finite directed graph having no cycles (namely, loop) therein. The directed acyclic graph (DAG) grows in between two consecutive entries in the distributed ledger, wherein an end of the directed acyclic graph (DAG) for a given entry indicates termination of time associated with the given entry. Consequently, the termination of time associated with the given entry allows for addition of new entries in the distributed ledger. The time associated with a given entry indicates a time in which plurality of operation records associated with the given entry is being validated within the operation recordal system.

Optionally, the distributed ledger stores references to a start and an end of the DAG, as well as references to the executable contract object employed for operation of the operation recordal system. The information pertaining to the distributed ledger is spread in the operation recordal system, so that failure of a given node of the operation recordal system cannot represent a single-point-of-failure, thereby vastly increasing operation system robustness to malicious third-party attacks and also equipment failure in one or more of the computing nodes.

Specifically, an entry from the at least one entry in the distributed ledger include an address, a link, an offset to a root node and a leaf node of the directed acyclic graph (DAG) corresponding to the plurality of operation records relating to the entry. It will be appreciated that the root node indicates the start of the directed acyclic graph (DAG) and the leaf node indicates the end of the directed acyclic graph (DAG). Beneficially, the references to the executable contract object and the start and the end of the directed acyclic graph (DAG) within the distributed ledger allows the second set of computing nodes participating in the consensus proffering process to access data associated with the plurality of operation records corresponding to the plurality of operation recordal requests.

Moreover, optionally, the random number generated by the distributed random beacon may be included in the at least one node in the directed acyclic graph. In such case, an order of the at least one node in the directed acyclic graph is determined based on the random number generated for a given epoch.

Furthermore, optionally, a directed acyclic graph is validated by the distributed ledger by including a number of hashes of at least one node in the directed acyclic graph into an entry corresponding thereto. Beneficially, such validation of the directed acyclic graphs serves the purpose that consensus is created regarding which the at least one node exists in the directed acyclic graph. Moreover, such validation of the directed acyclic graph provides additional ordering to the order of the directed acyclic graph.

Furthermore, the term "*data response*" refers to a data provided so as to participate in the consensus proffering process for validation of the plurality of operation recordal requests. Pursuant to embodiments of the present disclosure, the data response is offered by each of the second set of computing nodes. It will be appreciated that the data response offered by each of the second set of computing nodes is based on the computational task (for example, a difficulty of the computational task) generated by the operation recordal system for recordal of the plurality of operation records as the at least one entry in the distributed ledger. In an example, the data response is a bid.

Optionally, the data response commitment of the data response offered by a computing node from the second set of computing nodes comprise at least one of: a quantity parameter associated with proposed data response , a nonce, a public key hash associated with the computing node. More optionally, the quantity parameter associated with the proposed data response may be defined in terms of a monetary value, such as an amount in cryptocurrency, an amount in digital currency, and so forth, or in terms of a resource, such as a computing power. In an example, the quantity parameter associated with the proposed data response is provided as a bid amount in terms of Bitcoins. Furthermore, the nonce refers to a one-time code associated with the computing node. The nonce of the computing node is selected in random or pseudo-random manner. Beneficially, the nonce prevents attacks to reveal data associated with the data response or the proposed resolving process associated with the data response, for example, a brute-force attack. Additionally, the data response comprises the public key hash associated with the computing node, wherein the public key provides an identification of the computing node. Moreover, hashing the public key prevents identity theft (such as pre-image attack) to the computing node.

The data responses comprise the proposed resolving process, wherein the "*proposed resolving process*" refers to a resolving process to the computational task. Optionally, the proposed resolving process is a complete resolving process or a partial resolving process to the computational task. Moreover, a proposed resolving process provided by a given computing node from the second set of computing nodes provides a proof that the given computing node has spent time and resources to solve the computational task.

Optionally, a given proposed resolving process by a given computing node from the second set of computing nodes is generated by performing the initial mining algorithm as described in the executable contract object . Specifically, the given proposed resolving process is derived by performing a randomised search (namely, a brute force search) for a resolving process to the computational task. Moreover, the randomised search for the resolving process is initialised with the public key relating to the given computing node. In an example, the computing node performs the randomised search for a resolving process to a computational task such that the resolving process starts with at least a number of zeroes corresponding to the computational task comprising a cryptographic hash function task.

More optionally, the second set of computing nodes employ Markov chain Monte Carlo (MCMC) methods (algorithms) to generate the proposed resolving process. Specifically, the second set of computing nodes employ the MCMC algorithm to generate a resolving process to the computational task such that the resolving process is randomised. More specifically, the MCMC algorithm takes the computational task as a function argument to generate a data structure representing the resolving process. Moreover, the resolving process generated using the MCMC algorithm has finite run time, i.e. the resolving process is generated within a finite time, and the resolving process is optimal (namely, heuristic). Beneficially, employing the MCMC algorithm for generating the resolving process to the computational task prevents wastage of resources (such as computing power) in generation thereof. Beneficially, employing the MCMC algorithm greatly benefits in optimising efficiency in generating the resolving process to the computational task by being run multiple times as opposed to conventional algorithms that perform a single run to determine the resolving process for a very long time. Moreover, the MCMC algorithms enables determination of the resolving process in an optimal runtime, wherein the optimal runtime is not small and neither infinitely large. Subsequently, the technical problem associated with low runtime is addressed thereby preventing high number of repetitions for solving the computational task. Moreover, the technical problem associated with low runtime is addressed thereby enabling time-efficient system.

Optionally, the operation recordal system receives the data response from each of the second set of computing nodes to implement an unbiased competitive process amongst the second set of computing nodes.. Specifically, a resolving process for the computing task is sold in the unbiased competitive process. In an unbiased competitive process, a data response commitment and a proposed resolving process is provided to the operation recordal system by a given computing node from the second set of computing nodes. It will be appreciated that, in this scenario, the given computing node provides the data response commitment and the proposed resolving process without knowing data response provided by each of the second set of computing nodes except the given computing node. Subsequently, in such auction, a winner computing node is decided based on the data responses. Moreover, in the unbiased competitive process, the winner computing node wins but a price paid by the winner computing node corresponds to a quantity parameter associated with proposed data response corresponding to a second highest quantity parameter associated with the proposed data response .

In an example implementation, the resolving process to the computational task is sold over an unbiased competitive process that is implemented as an unbiased Vickrey process. The unbiased Vickrey process is be carried out over a time period of one entry, wherein an entry 'n' defines a starting point of the unbiased Vickrey process and an entry 'n+1' defines end of the unbiased Vickrey process. Moreover, the plurality of operation recordal requests are received and validated in the said time period of one entry. In this regard, an order of the operation recordal requests does not matter thereby eliminating double-spending attack in the data responses provided for the unbiased Vickrey process. Furthermore, to implement the unbiased Vickrey process, data responses is obtained from the second set of computing nodes. Such data responses from each of the second set of computing nodes is stored as a node in the directed acyclic graph. It will be appreciated that in the unbiased Vickrey process, the data responses are not disclosed to public (such as to the plurality of computing nodes in the distributed ledger). Beneficially, the unbiased Vickrey process amongst the second set of computing nodes overcomes a technical problem relating to consensus proffering processes by preventing a computing node from providing quantity parameter associated with the data response overly high or overly low to manipulate prices (such as, for example, the quantity parameter associated with the proposed data response) in the consensus proffering process. Subsequently, the second set of computing nodes participate in the blindfolded auction by providing data responses having a true quantity parameter associated with the data response that is in accordance with the computational task.

Optionally, at an instance, a winner computing node does not honour a data response provided thereby. Specifically, the winner computing node may not be able to pay a quantity parameter associated with the proposed data response at a time of winning the consensus proffering process. Subsequently, a runner-up computing node wins the consensus proffering process. In an example, a quantity parameter associated with a proposed data response of the runner-up computing node may be second highest. In such case, the runner-up computing node pays a price equivalent to a third highest quantity parameter associated with a proposed data response.

Moreover, optionally, the operation recordal system requires each of the second set of computing nodes to deposit a stake resource. Beneficially, the stake resource prevents the winning computing node from disregarding a data response previously provided by the winning computing node for participating in the consensus proffering process. Typically, the operation recordal system requires each of the second set of computing nodes to deposit a large amount of the stake resource which is returned to the second set of computing nodes upon completion of the consensus proffering process. Such stake resource provides protection from problematic or fraudulent behaviours of the second set of computing nodes, thereby enabling reliable and effortless implementation of the consensus proffering process.

It will be appreciated that the stake resource is delegated towards recordal of the plurality of operation recordal requests as an entry in the distributed leger. Optionally, each computing node from the second set of computing nodes lock the stake resource, wherein the stake resource does not make any alteration to the entries. Furthermore, the stake resource is locked specifically for creation of the entry. It will be appreciated that the locked stake resource cannot be used for recordal of a second plurality of operation records in a different entry. In other words, the locked stake resource cannot be used for participation in a second consensus proffering process. However, the operation recordal system enables the second set of computing nodes to redelegate the stake resource for recordal of, for example, the second set of plurality of operation recordal requests as a second entry in the distributed ledger. In such case, a redelegate operation is initialised such that the locked in stake resource is no longer used for participation in the consensus proffering process, rather used for participation in a second consensus proffering process.

It will be appreciated that the term "second" used herein above does not refer to a rank, rather it is used to denote an event different from a previous event.

Optionally, the operation recordal system requires the depositing of the stake resource from each of the second set of computing nodes so as to block some of computing nodes providing a stake resource lower than a threshold stake resource, from participating in the consensus proffering process. Specifically, in such case, the operation recordal system operates to receive data response from computing nodes providing stake resource higher than the threshold stake resource. Subsequently, blocking receival and analysis of data response from some of the computing nodes from the second set of computing nodes enables the system to enhance a run-time of the system so as to maintain an optimum speed for execution thereof. Moreover, blocking enables the system to perform at a reduced initial resource (for example, computing energy, processing energy, and so forth) thereby reducing power consumption, heat dissipation, time consumption, and operational cost for performance of the system. Additionally, optionally, information relating to some of the computing nodes providing stake resource lower than the threshold stake resource is encrypted (for example, masked) from access thereto, thereby preventing attacks thereupon, for example improve system safety).

Moreover, optionally, the term "*threshold*" as mentioned herein above refers to a level or a magnitude that must be exceeded for a certain operation to be manifested. Pursuant to embodiments of the present disclosure, the term threshold (namely, threshold stake resource) refers to a level of stake resource that must be exceeded by a given stake resource provided by a given computing node for participating in the consensus competitive process. Additionally, optionally, such level of threshold for the threshold stake resource is decided dynamically. In an example, the level of the threshold stake resource is decided based on the computational task. In another example, the level of the threshold stake resource is decided based on a number of second set of computing nodes. In yet another example, the level of the threshold stake resource is decided based on Furthermore, upon successful completion of the consensus proffering process, the stake resource is released after a release time. Optionally, the release time is defined in terms of an entry time (for example, a block time in a blockchain). Pursuant to embodiments of the present disclosure, the release time for release of the stake resource is long. In an example, the release time may be six months. Beneficially, a long release time ensures that second set of computing nodes participating in the consensus proffering process through ordinary stake mechanism encounter a relatively high exit resource token for withdrawing from operation recordal system. Additionally, the long release time prevents malicious activity that could harm the operation recordal system. Typically, long release time prevent an attacker from buying more stake using the stake resource to attack the operation recordal system. Subsequently, the long release time prevents attacker from selling the stake bought for monetisation thereof by locking the stake resource. Moreover, the attacker will have to bear economic cost for the attack thereby making the consensus proffering process and the operation recordal system robust against such attacks and enhancing security thereof.

Furthermore, the directed acyclic graph analyses the data response received from each of the computing node in the second set of computing nodes and determines an optimal resolving process for the recordal of operation records as entries in the distributed ledger. Specifically, the proposed resolving process along with the data response commitment provided by each of the second set of computing nodes allows analysis of the data response, thereby enabling selection of an optimal data response. Moreover, the optimal resolving process described in the determined optimal data response is employed for recordal of the plurality of operation recordal requests as the at least one entry in the distributed ledger.

Pursuant to embodiments of the present disclosure, the term "*optimal resolving process*" refers to a favourable resolving process for the computational task for recordal of the plurality of operation recordal requests as an entry in the distributed ledger. Specifically, the optimal resolving process provides to an efficient way of executing the computational task. It will be appreciated that the computational task may be implemented in a real-life instance. Therefore, an approach for determining the optimal resolving process varies with respect to the computational task. Optionally, the optimal solution to the computational task are described based on different parameters for different instances. In an example, a resolving process may be analysed based on different parameters, namely, an economic value associated with the resolving process, energy consumption in generating the resolving process, energy consumption in executing the resolving process, cost (for example, monetary or a physical resource quantity) associated with the resolving process, time associated with the resolving process, and security associated with the resolving process. In such case, a resolving process is said to be optimal resolving process if the resolving process is economic and feasible to execute, costumes less energy (for example, computing energy, processing energy, and so forth) while generation and/or execution thereof, thereby minimising electricity consumption and reducing operational cost thereof, consumes less-time for generation thereof, thereby enhancing run-time, and does not compromise with security of the system. Furthermore, it will be appreciated that the data response providing the optimal resolving process is said to be optimal data response.

Optionally, the directed acyclic graph determines the optimal resolving process from the proposed resolving process to the computational task received from each of the computing node in the second set of computing nodes based on a usefulness of each of the proposed resolving processes. More optionally, a usefulness of a given proposed resolving process is defined in terms of economic value derived from executing the given proposed resolving process. Optionally, the given proposed resolving process is termed as the optimal resolving process when the usefulness of the given proposed resolving process maximises a quality of the resolving process over the proposed resolving process provided by each of the second set of computing nodes.

Optionally, the objective function in the executable contract object is further employed to compare the data response provided by each of the second set of computing nodes. In addition, the objective function maps the proposed resolving process to a score. The score provided to the resolving processes is optionally a numerical value, an alphabetical grade, a ranking and so forth. In accordance with an embodiment of the present disclosure, the objective function takes a given proposed resolving process and returns a score (for example, a double-precision floating point number) representing a quality of the given proposed resolving process. In an example, a lower score that is, having a low numerical value may be considered as the optimal resolving process. Therefore, the objective function allows for evaluating the proposed resolving process by each if the second set of computing nodes and determining the optimal resolving process having best resolving process for the computational task included in the executable contract object .

Optionally, the objective function includes a fixed test-set for analysing the proposed resolving process and determining score for the proposed resolving process, wherein the test-set includes data attributes, algorithms, and the like for testing parameters like time complexity and processing complexity associated with the proposed resolving process. In addition, the test-set confirms if the proposed set complies with requirements (namely, terms and conditions) mentioned in the executable contract object . Furthermore, optionally, the objective function includes a test-set generator instead of the fixed test-set. Therefore, the test-set generator generates a unique and random test for each of the proposed resolving process. Beneficially, such generation of unique and random test-set prevents the operation recordal system against the proposed resolving process that overfit to a fixed test, wherein overfitting refers to learning data patterns up to an extent that negatively affects performance of the proposed resolving process by reducing scope of improvement and innovation. Therefore, overfitting diminishes generalizability of the proposed resolving process to new data. Furthermore, complexity of the test-set generator varies with the computational task definition. In an instance, the objective function can have a large fixed public test dataset and can extract a subset of the fixed public test dataset for each block using a private pseudo-random number generator.

Optionally, the test set generator of the objective function is delayed from publication of the test-set in the block associated therewith. For instance, in one embodiment of, first proofs-of-work are published in the directed acyclic graph (DAG) by the second set of computing nodes at block time N, then the proposed resolving process by each of the second set of computing nodes are published by the in the directed acyclic graph (DAG) at block time N+1 and finally the test-set is published by the objective function at time N+2 by hashing all of the published proposed resolving process and using a resulting number to initialize a pseudo-random number generator that selects a subset of data for evaluation of the proposed resolving process. In addition, the evaluation of the proposed resolving process is delayed using newly disclosed data for evaluation of the proposed resolving processes. Optionally, the objective function in the executable contract object specifies a performance level in form of a score beyond which the computational task is considered closed and no further performance improvements can be relied upon if they are smaller than variance in subset of data for evaluation of the proposed resolving process. Consequently, a chance of fake or ingenuine participants proposing the resolving process get reduced as random subset of data leads to uncertainty in evaluation of the proposed resolving process. In an instance, when a resource token (namely, the stake resource) is required for proposing a resolving process, it becomes an offset against attacks and flood of fake proposed resolving process by unauthorized participants in the consensus proffering process.

Additionally, optionally, a verification function is employed to verify a quality of a given proposed resolving process. Typically, a score corresponding to the quality of the given proposed resolving process is generated by the objective function. Subsequently, the score corresponding to the quality of the given proposed resolving process is verified using the verification function.

More optionally, the initial mining algorithm, the objective function, and the verification function operate on other functions rather than information relating to the plurality of operation records for recordal thereof. In an example, the initial mining algorithm and the objective function works on training of one or more machine learning algorithms. In such an example, an optimal resolving process may be an optimal set of parameters (such as network weights, hyper parameters and so forth) that yield most optimized classifications, or another optimal resolving process may be architectures including the network layout and the like. In addition, the mechanisms of the data response provided by each of the second set of computing nodes may not be constrained, except for interface for accessing the operation recordal system, however the data response provided by each of the second set of computing nodes could be further constrained according to the objective function. For example, the objective function could incorporate a penalty on a data response that comprise large storage space (e.g. a large neural network might be hundreds of megabytes); and objective function priorities earlier data responses with identical or higher performance.

Optionally, the operation recordal system further employs the optimal resolving process for the recordal of operation records as entries in the distributed ledger and incentivises a computing node from the second set of computing nodes, associated with the optimal resolving process. It will be appreciated that the optimal resolving process provided by the winning computing node is only revealed after completion of the consensus proffering process. This serves as a measure to prevent theft of work (namely, the proposed resolving process) and resubmission thereof with minor improvements. Furthermore, the optimal resolving process is employed to record the plurality of operation recordal requests as, for example, as a given entry in the distributed ledger. Additionally, optionally, upon determination of the optimal resolving process, the given entry is recorded by incurring a trivially small but non-zero cost. Optionally, the given entry is recorded by a computing node providing the optimal resolving process.

Additionally, the computing node from the second set of computing nodes providing the optimal resolving process (namely, the winning node) is incentivised. Optionally, the winning computing node is incentivised by providing an incentive resource that comprises new incentive resource for optimal recordal of the given entry and an incentive stake resource associated with an operation resource token, wherein the operation resource token is provided by the first set of computing nodes for recordal of the plurality of operation records as the given entry in the distributed ledger. More optionally, the incentive resource may comprise complete or a portion of a cumulative of the quantity parameter associated with the proposed data response provided by each of the second set of computing nodes.

In an embodiment, the winning computing node is incentivised with the incentive resource, wherein the incentive resource is defined in term of a cryptocurrency, for example, a Bit Coin Currency (BTC ®). In such case, the incentive resource is a sum of a new incentive resource and an incentive stake resource associated with an operation resource token. In an example, the new incentive resource is 12.5 BTC, and the incentive stake resource associated with the operation resource token is 0.001 BTC.

Optionally, an incentive scheme is deployed by the operation recordal system to provide the incentive resource to the winning computing node, wherein the winning computing node receives the incentive resource for optimal recordal of entries in the distributed ledger less often. Alternatively, the incentive scheme deployed by the system facilitates earning of more incentive resource for each entry recorded in the distributed ledger by the winning computing nodes. Specifically, the operation resource token is charged by the operation recordal system from the first set of computing nodes so as to incentivise the winning computing node. Beneficially, including the incentive stake resource associated with the operation resource token in the incentive resource enables securing the distributed ledger from load for generation of new incentive resource after every optimal recordal of entries in the distributed ledger as generation of such new incentive resource has a limited lifetime.

Moreover, optionally, the incentive scheme deployed by the operation recordal system operates to provide an incentive resource not only to the winning computing node, rather, distributes the incentive resource amongst each of the second set of computing nodes along with the winning computing node. Conventionally, distributing the incentive resource to each of the second set of computing nodes along with the winning computing node is not viable as each of the second set of computing nodes compete for optimal recordal of next valid entry in the distributed ledger, and therefore distributing the incentive resource amongst each of the second set of computing nodes would disincentivise working hard to find optimal resolving process for recordal of next entry. However, the reward scheme defined herein overcomes technical problems associated with conventional incentivising schemes implemented on distributed ledgers and further enables incentivisation of each of the second set of computing nodes participating in the consensus proffering process.

Pursuant to embodiments of the present disclosure, the incentivising scheme is deployed such that the incentive resource is divided proportionally between the winning computing node and rest of the second set of computing nodes, resulting in positive changes to incentivisation mechanism in the distributed ledger. In an example, the incentive resource may comprise the incentive stake resource associated with the operation resource token and a cumulative of the quantity parameter associated with the proposed data response provided by each of the second set of computing nodes for participating in the consensus proffering process. Such incentive resource is not dependent on new incentive resource thereby preventing generation of the new incentive resource in the distributed ledger from reaching a saturation level soon. The incentive resource is divided proportionally amongst each of the second set of computing nodes. Optionally, a proportion for division of the incentive resource amongst the second set of computing nodes, except the winning computing node, is based on the stake resource provided by each of the second set of computing nodes. Furthermore, a proportion for division of the incentive stake resource for the winning computing node is based on the quantity parameter associated with the proposed data response provided by the winning computing node.

Beneficially, the incentive scheme enables incentivisation of each of the second set of computing nodes for recordal of the entries in the distributed ledger thereby scaling the system to include many computing nodes for incentivisation. Moreover, such incentive scheme operates to make under-subscribed consensus proffering process more attractive, wherein the under-subscribed consensus proffering process may have low, but non-zero, incentive stake resource thereby having less participants therein.

Optionally, the operation recordal system incentivises the computing node from the second set of computing nodes, associated with the optimal resolving process (namely, the winning node) by acquiring a quasi-static operation resource token from the first set of computing nodes. Notably, the operation resource token is said to be quasi-static when the operation resource token is predictable and well controlled. Beneficially, such quasi-static operation resource token ensures that earnings from the operation resource token never exceeds a predefined growth rate thereby creating a stable incentive scheme. In this regard, if an operation resource token obtained for recordal of a given entry in the distributed ledger is higher than expected resource token that is to be paid to a winning computing node for recordal of the given node, then extra earnings are saved in the operation recordal system. Moreover, if the operation resource token obtained for recordal of the given entry in the distributed ledger is lower than the expected resource token that is to be paid to the winning computing node for recordal of the given node, then the extra earnings saved in the operation recordal system are extracted to ensure a certain level of pay-out to the winning computing node.

It will be appreciated that in an uncontrolled market executed in the distributed ledger, the operation resource token provided by the first set of computing nodes may vary greatly. Subsequently, such variation may lead to periods wherein performing the work to determine a resolving process for a computational task for recordal of an entry in the distributed ledger may turn out to be uneconomical for second set of computing nodes. However, the quasi-static decreases a likelihood of occurrence of such periods.

Optionally, the operation recordal system facilitates fair distribution of tokens amongst the plurality of computing nodes, wherein the tokens describe a wealth associated with a computing node in terms of, for example, a cryptocurrency. Typically, such fair distribution of tokens ensures that relative wealth between any two computing nodes from the plurality of computing nodes, who participate in consensus proffering process over same period of time remains constant or within a given tolerance.

More optionally, the fair distribution of the tokens is achieved by redesigning of the tokens. Specifically, the tokens are designed such that the tokens are prevented from being re-staked before completion of a round of a consensus proffering process. Beneficially, such redesigned tokens grow most in a first year and much less in following year thereby giving the redesigned tokens immediate utility

More optionally, the redesigned tokens are implemented as an account-based token, wherein each account has three sub-accounts. Moreover, the three sub-accounts may correspond to a first account for tokens at stake, a second account for ordinary tokens, and a third account for tokens that cannot be staked. Optionally, the redesigned tokens may be moved between the first account and the second account, and vice-versa. Specifically, the first account is implemented as a list of redesigned tokens together with a time at which they were staked for participation in a consensus proffering process. It will be appreciated that such staked tokens cannot be used. Moreover, the second account is implemented as a list of redesigned tokens that are available for performing operations thereupon. Additionally, the third account is implemented as a list of redesigned tokens with a time at which they were given as an incentive resource. Specifically, the redesigned tokens in the third account cannot be moved out of this account until it reaches a given age. Additionally, optionally, each of the accounts has a signature scheme associated with it that allows the accounts to be signature agnostic. This serves the purpose of ensuring higher level of security in the accounts. In an example, the signature scheme is implemented as a postquantum signature scheme.

The present disclosure also relates to the method as described above. Various embodiments and variants disclosed above apply mutatis mutandis to the method.

Optionally, the method comprises receiving the data response from each of the second set of computing nodes to implement an unbiased competitive process amongst the second set of computing nodes.

Optionally, the method requires each of the second set of computing nodes to deposit a stake resource.

Optionally, the second set of computing nodes employ Markov chain Monte Carlo (MCMC) methods (algorithms) to generate the proposed resolving process.

Optionally, the directed acyclic graph determines the optimal resolving process from the proposed resolving process to the computational task received from each of the computing node in the second set of computing nodes based on a usefulness of each of the proposed resolving processes.

Optionally, the method employs a distributed random beacon to generate a random number for inclusion in the entries in the distributed ledger.

Optionally, the method operates to accommodate an executable contract object defining the computational task that is to be solved.

Optionally, the method further employs the optimal resolving process for the recordal of operation records as entries in the distributed ledger and incentivises a computing node from the second set of computing nodes, associated with the optimal resolving process.

More optionally, the method incentivises the computing node from the second set of computing nodes, associated with the optimal resolving process by acquiring a quasi-static operation resource token from the first set of computing nodes.

### DETAILED DESCRIPTION OF THE DRAWINGS

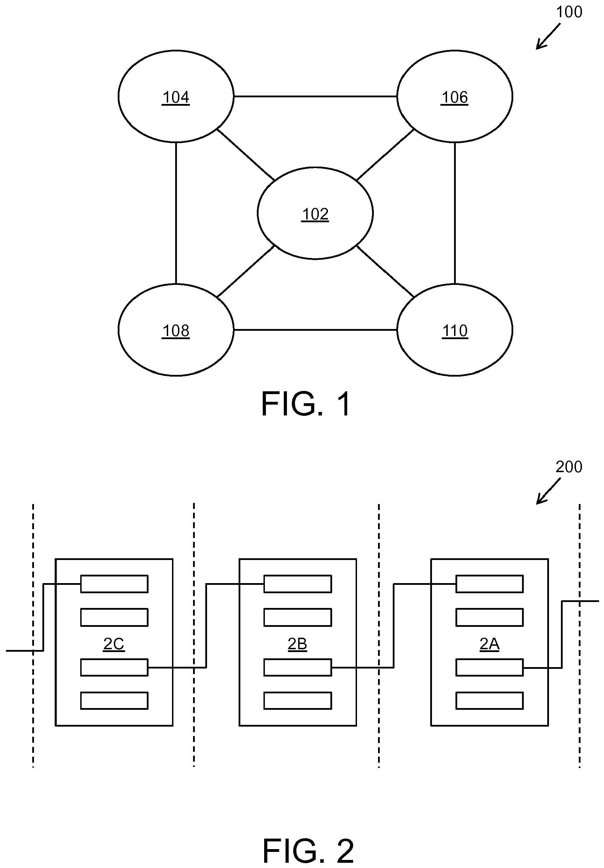

Referring to FIG. 1, there is shown an illustration of an operation recordal system **100**, in accordance with an embodiment of the present disclosure. The operation recordal system **100** includes a plurality of computing nodes (depicted as computing nodes **102**, **104**, **106**, **108** and **110**) that are mutually interconnected via a data communication network, wherein, when in operation, the operation recordal system **100** facilitates an optimal recordal of operation records as entries in a distributed ledger.

It may be understood by a person skilled in the art that the FIG. 1 includes a simplified illustration of the operation recordal system **100** for sake of clarity only, which should not unduly limit the scope of the claims herein. The person skilled in the art will recognize many variations, alternatives, and modifications of embodiments of the present disclosure.

Referring to FIG. 2, there is shown a schematic illustration of the operation recordal system **200** (such as the operation recordal system **100** of FIG. 1) in operation, in accordance with an embodiment of the present disclosure. As shown, the system comprises entries (depicted as entries **2A**, **2B** and **2C**), wherein each entry contains references to a start and an end of a DAG (not shown) forming the distributed ledger. At an instance, the operation recordal system **200** receives a plurality of operation recordal requests, corresponding to a plurality of operation records, from a first set of computing nodes, to be recorded as entry **2A** in the distributed ledger. The operation recordal system **200** generates a computational task for recordal of the plurality of operation records as the entry **2A**. Additionally, the operation recordal system **200** employs a DAG associated with the entry **2A** to store a data response therein. The data response is received from each of a computing node in a second set of computing nodes. The data response comprises a data response commitment and a proposed resolving process to the computational task generated by the operation recordal system **200** for recordal of the plurality of operation records as the entry **2A** in the distributed ledger. Moreover, the DAG analyses the data response received from each of the computing node in the second set of computing nodes to determine an optimal resolving process for the recordal of the entry **2A** in the distributed ledger.

Furthermore, each entry is connected to a previous entry within the distributed ledger. In this regard, entry **2C** is connected to previous entry **2B** and further entry **2B** is connected to entry **2A**. the directed acyclic graph, from each of a computing node in a second set of computing nodes dashed lines in the figure show a time period. In each of the time periods, a leader (that is elected in a random manner) is operable to decide the start and the end of the DAG, associated with an entry in the time period.

It may be understood by a person skilled in the art that the FIG. 2 is merely an example, which should not unduly limit the scope of the claims herein. The person skilled in the art will recognize many variations, alternatives, and modifications of embodiments of the present disclosure.

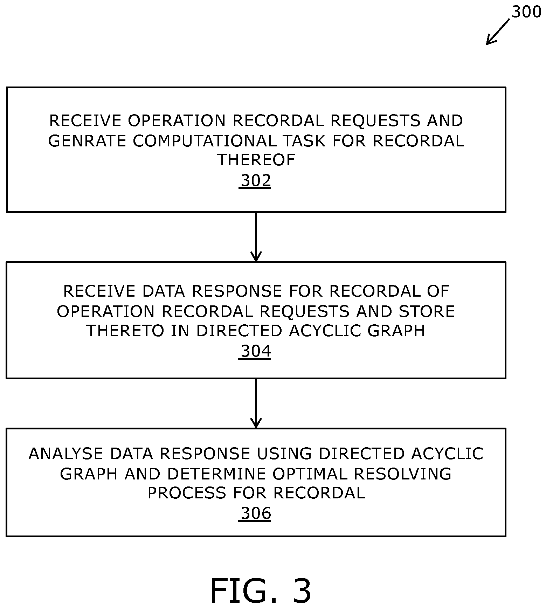

Referring next to FIG. 3, there is shown an illustration of a flow chart of steps of a method **300** of (namely, a method for) operating an operation recordal system, in accordance with an embodiment of the present disclosure; for example, the operation system is implemented as described in the foregoing. In the method **300**, the operation recordal system includes a plurality of computing nodes that are mutually interconnected via a data communication network, wherein, when in operation, the operation recordal system facilitates an optimal recordal of operation records as entries in a distributed ledger. At a step **302**, a plurality of operation recordal requests are received corresponding to a plurality of operation records, from a first set of computing nodes, to be recorded as at least one entry in the distributed ledger and a computational task for recordal of the plurality of operation records is generated. At a step **304**, a data response comprising a data response commitment and a proposed resolving process to the computational task is received from each of a computing node in a second set of computing nodes. In such case, a directed acyclic graph for storing the received data response from each of a computing node in a second set of computing nodes. At a step **306**, the data response received from each of the computing node in the second set of computing nodes is analysed using the directed acyclic graph. Furthermore, an optimal resolving process is determined for the recordal of operation records as entries in the distributed ledger.

The steps **302**, **304**, and **306** are only illustrative and other alternatives can also be provided where one or more steps are added, one or more steps are removed, or one or more steps are provided in a different sequence without departing from the scope of the claims herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A operation recordal system that includes a plurality of computing nodes that are mutually interconnected via a data communication network, wherein, when in operation, the operation recordal system facilitates optimal recordal of operation records as entries in a distributed ledger, **characterized in that**:
(a) the system is arranged, when in operation, to receive a plurality of operation recordal requests, corresponding to a plurality of operation records, from a first set of computing nodes, to be recorded as at least one entry in the distributed ledger and generates a computational task for recordal of the plurality of operation records;
(b) the system receives a data response comprising a data response commitment and a proposed resolving process to the computational task, from each of a computing node in a second set of computing nodes, wherein the system employs a directed acyclic graph for storing the data responses therein;
(c) the directed acyclic graph analyses the data response received from each of the computing node in the second set of computing nodes and determines an optimal resolving process for the recordal of operation records as entries in the distributed ledger.

2. A system of claim 1, wherein the operation recordal system receives the data response from each of the second set of computing nodes to implement an unbiased competitive process amongst the second set of computing nodes.

3. A system of any of the claims 1 or 2, wherein the operation recordal system requires each of the second set of computing nodes to deposit a stake resource.

4. A system of any of the preceding claims, wherein the second set of computing nodes employ Markov chain Monte Carlo (MCMC) methods (algorithms) to generate the proposed resolving process.

5. A system of any of the preceding claims, wherein the directed acyclic graph determines the optimal resolving process from the proposed resolving process to the computational task received from each of the computing node in the second set of computing nodes based on a usefulness of each of the proposed resolving process.

6. A system of any of the preceding claims, wherein the operation recordal system employs a distributed random beacon to generate a random number for inclusion in the entries in the distributed ledger.

7. A system of any of the preceding claims, wherein the operation recordal system operates to accommodate an executable contract object defining the computational task that is to be solved.

8. A system of any of the preceding claims, wherein the data response commitment of the data response offered by a computing node from the second set of computing nodes comprise at least one of: a quantity parameter associated with the data response, a nonce, a public key hash associated with the computing node.

9. A system of any of the preceding claims, wherein the operation recordal system further employs the optimal resolving process for the recordal of operation records as entries in the distributed ledger and incentivises a computing node from the second set of computing nodes, associated with the optimal resolving process.

10. A system of claim 9, wherein the operation recordal system incentivises the computing node from the second set of computing nodes, associated with the optimal resolving process by acquiring a quasi-static operation resource token from the first set of computing nodes.

11. A method of (for) operating an operation recordal system that includes a plurality of computing nodes that are mutually interconnected via a data communication network, wherein, when in operation, the operation recordal system facilitates an optimal recordal of operation records as entries in a distributed ledger, **characterized in that** the method includes:
(a) receiving a plurality of operation recordal requests, corresponding to a plurality of operation records, from a first set of computing nodes, to be recorded as at least one entry in the distributed ledger and generating a computational task for recordal of the plurality of operation records;
(b) receiving a data response comprising a data response commitment and a proposed resolving process to the computational task, from each of a computing node in a second set of computing nodes, wherein the method employs a directed acyclic graph for storing the data responses therein;
(c) analysing the data response received from each of the computing node in the second set of computing nodes using the directed acyclic graph and determining an optimal resolving process for the recordal of operation records as entries in the distributed ledger.

12. A method of claim 11, wherein the method comprises receiving the data response from each of the second set of computing nodes to implement an unbiased competitive Vickrey process amongst the second set of computing nodes, wherein the method requires each of the second set of computing nodes to deposit a stake resource.

13. A method of any of the claims 11 and 12, wherein the directed acyclic graph determines the optimal resolving process from the proposed resolving process to the computational task received from each of the computing node in the second set of computing nodes based on a usefulness of each of the proposed resolving process.

14. A method of any of the claims 11-13, wherein the method operates to accommodate an executable contract object defining the computational task that is to be solved.

15. A method of any of the claims 11-14, wherein the method further employs the optimal resolving process for the recordal of operation records as entries in the distributed ledger and incentivises a computing node from the second set of computing nodes, associated with the optimal resolving process.
